# EUROPÄISCHE PATENTSCHRIFT

(11) **EP 2 151 677 B1**
(45) Veröffentlichungstag und Bekanntmachung des Hinweises auf die Patenterteilung: **22.08.2018**
(21) Anmeldenummer: 09009559.7
(22) Anmeldetag: 23.07.2009
(51) Int. Cl.: G01M 13/04, G01M 15/12, G01M 13/02, G01N 29/44, G01N 29/48, G01H 9/00, G01N 3/56, F16C 19/52

(54) **Verfahren zur Bestimmung des Verschleisses oder der Laufleistung eines sich bewegenden Bauteils**
Method for determining the wear or kilometrage of a moving component
Procédé de détermination de l'usure ou du kilométrage d'un composant mobile

(30) Priorität: 31.07.2008 DE 102008035783
(43) Veröffentlichungstag der Anmeldung: 10.02.2010
(73) Patentinhaber: Schmutzenhofer, Michael, 86169 Augsburg (DE)
(72) Erfinder: Schmutzenhofer, Michael, 86169 Augsburg (DE)
(74) Vertreter: Möbus, Steffen

(56) Entgegenhaltungen:
- DE-A1- 3 907 419
- JP-A- 2005 164 314
- JP-A- 2006 234 786
- US-A- 4 884 449
- US-A1- 2008 154 482
- US-B1- 6 507 790

## Beschreibung

Die Erfindung betrifft ein Verfahren zur Bestimmung der Laufleistung oder des Verschleißes eines sich bewegenden Bauteils oder einer Bauteilgruppe.
Sich bewegende Bauteile, wie Lager, Wellen, Räder, oder ganze Maschinen, die sich bewegende Bauteile oder Bauteilgruppen aufweisen, wie beispielsweise ein Verbrennungsmotor, unterliegen durch ihren Betrieb einem Verschleiß. Die Größe dieses Verschleißes hängt von der Laufleistung, den Betriebsbedingungen, wie beispielsweise einer ausreichenden Schmierung, und der Belastung während des Betriebs ab. Siehe z.B. die Dokumente DE3907419 oder JP2005164314. Aus verschiedenen Gründen kann es wichtig sein, die Größe dieses Verschleißes zu ermitteln. Dies gilt beispielsweise für den Zeitpunkt, zu dem eine Wartung oder ein Austausch des Bauteils oder der Bauteilgruppe notwendig ist. Auch bei einem Verkauf von Maschinen, wie beispielsweise einem Verbrennungsmotor oder dem Fahrzeug, das diesen Verbrennungsmotor aufweist, kann es wichtig sein, den Verschleiß der Maschine, des Motors oder von Bauteilen zuverlässig feststellen zu können, um den Verkaufspreis entsprechend festzulegen.

Die Bestimmung des Verschleißes oder der Laufleistung von sich bewegenden Bauteilen oder Bauteilgruppen kann erfolgen, indem das Bauteil selbst beispielsweise hinsichtlich seiner Abnutzungsspuren, seiner Laufeigenschaften oder ähnlichem inspiziert wird. Wenn sich das Bauteil oder die Bauteilgruppe in einer größeren Maschine oder einem Motor befindet, muss dazu zuerst die Maschine oder der Motor auseinander genommen werden, was sehr aufwendig sein kann.

Eine andere Möglichkeit, den Verschleiß oder die Laufleistung von sich bewegenden Bauteilen oder Bauteilgruppen zu ermitteln, besteht darin, einen Betriebsstundenzähler oder beispielsweise bei einer Verbrennungsmaschine in einem Fahrzeug einen Kilometerzähler vorzusehen. Der Nachteil liegt jedoch darin, dass es relativ einfach ist, solche Betriebsstundenzähler oder Kilometerzähler zu verstellen. Beispielsweise kommt es bei einem Verkauf einer Maschine oder eines Fahrzeugs mit einem Verbrennungsmotor immer wieder vor, dass die Werte dieser Zähler erniedrigt werden, um eine geringere Laufleistung vorzutäuschen und somit einen höheren Verkaufspreis zu erzielen. Selbst wenn die Werte dieser Zähler stimmen, geben sie nur die Laufleistung an, die nicht unbedingt mit dem Verschleiß gleichgesetzt werden kann, da, wie oben schon angegeben, der Verschleiß auch von den Belastungen und Betriebsbedingungen des sich bewegenden Bauteils oder der Bauteilgruppe abhängt.

Die Aufgabe der vorliegenden Erfindung besteht somit darin, ein Verfahren anzugeben, mit dem es auf schnelle, einfache und zuverlässige Weise möglich ist, die Laufleistung beziehungsweise den Verschleiß von sich bewegenden Bauteilen oder Bauteilgruppen anzugeben.

Die gestellte Aufgabe wird erfindungsgemäß durch das Verfahren zur Bestimmung der Laufleistung oder des Verschleißes eines sich bewegenden Bauteils oder einer Bauteilgruppe, das die im Hauptanspruch aufgeführten Merkmale aufweist, gelöst. Die Unteransprüche geben bevorzugte Weiterbildungen an.

Beim erfindungsgemäßen Verfahren wird das Geräusch des sich bewegenden Bauteils oder der Bauteilgruppe gemessen. Dieses Geräusch verändert sich mit der Laufleistung oder dem Verschleiß des Bauteils. Das gemessene Geräusch wird dann mit im Vorhinein bestimmten Geräuschwerten verglichen. Der gemessene Geräuschwert wird dem im Vorhinein bestimmten Geräuschwert, dem er am nächsten liegt, zugeordnet. Diesem im Vorhinein bestimmten Geräuschwert ist wiederum ein Verschleißwert oder eine Laufleistung zugeordnet, die dann als der Verschleißwert oder die Laufleistung des gemessenen Bauteils bestimmt werden.

Die Geräuschvergleichswerte müssen im Vorhinein für die interessierenden Bauteile und für verschiedene Verschleißgrade und Laufleistungen ermittelt und beispielsweise gespeichert oder ausgedruckt werden, damit sie für den Vergleich zur Verfügung stehen. Das Ermitteln dieser Vergleichswerte ist relativ aufwendig, aber es kann sich beispielsweise für Verbrennungsmotoren in Kraftfahrzeugen lohnen.

Bei solchen Motoren gibt es eine überschaubare Anzahl verschiedener Modelle. Außerdem stehen Motore mit verschiedenen Laufleistungen oder Verschleißgraden in großer Zahl zur Verfügung, so dass zuverlässige Geräuschvergleichswerte ermittelt werden können. Sind die Vergleichswerte erst einmal ermittelt, so können danach auf einfache Weise eine Vielzahl unterschiedlich alter Motoren im Hinblick auf ihre Laufleistung und/oder ihren Verschleiß untersucht werden.

Bei der Ermittlung der Geräuschvergleichswerte muss das Geräusch des sich drehende Bauteils oder der Bauteilgruppe an einem Messpunkt gemessen werden, der dann auch nachher bei der eigentlichen Geräuschmessung zur Ermittlung des Verschleißes oder der Laufleistung des Bauteils verwendet wird. Um eine höhere Genauigkeit zu erzielen und um Unregelmäßigkeiten auszugleichen, ist es vorteilhaft, die Geräuschvergleichswerte an mehreren, beispielsweise drei Messpunkten zu ermitteln und daraus einen Mittelwert zu bilden. Die Mittelwertbildung kann beispielsweise in Form einer arithmetischen oder quadratischen Mittelwertbildung ausgeführt werden. Diese gleichen mehreren Messpunkte müssen dann auch nachher bei der eigentlichen Geräuschmessung zur Ermittlung des Verschleißes oder der Laufleistung des Bauteils wieder verwendet werden.

Für verschiedene Bauteile lassen sich verschiedene Frequenzbereiche ermitteln, bei denen es am vorteilhaftesten ist, das Geräusch zu messen, um eine möglichst gute Auskunft über den Verschleiß oder die Laufleistung des Bauteils zu erhalten.

Es hat sich herausgestellt, dass insbesondere eine Geräuschmessung im Ultraschallbereich von Vorteil ist, da hier Nebengeräusche, wie sie beispielsweise bei einem Verbrennungsmotor durch den Verbrennungsvorgang, die Auspuffgase und dergleichen entstehen, die Messung des eigentlichen Geräusches des sich bewegenden Bauteils weniger oder gar nicht stören. Bei Verbrennungsmotoren in Fahrzeugen hat sich eine Messung des Geräusches speziell im Bereich von 30 bis 50 kHz als vorteilhaft erwiesen. Der Anmelder hat hier durch viele Versuchsmessungen an vielen Motoren mit unterschiedlichen Laufleistungen und Verschleißgraden feststellen können, dass ein nahezu linearer positiver Zusammenhang zwischen der Stärke des Geräusches und dem Verschleißgrad beziehungsweise der Laufleistung vorliegt.

Bei der Messung des Geräusches wird vorteilhafterweise die Stärke des Geräusches, das heißt der Schalldruck gemessen.

Die Geräuschmessung erfolgt mit einer Schallaufnahmevorrichtung, wie einem Mikrofon oder einer Ultraschallsonde. Die gemessenen Werte werden vorteilhafterweise einer elektronischen Datenverarbeitungsvorrichtung zugeführt. Die Person, die die Messung durchführt, muss außerdem den Typ des zu untersuchenden Bauteils oder der Bauteilgruppe in die Datenverarbeitungsvorrichtung eingeben. Die Datenverarbeitungsvorrichtung führt dann einen Vergleich mit den in ihr gespeicherten oder ihr anderweitig zugeführten Geräuschvergleichswerten durch. Bei diesem Vergleich wird der gemessene Geräuschwert demjenigen in der Datenverarbeitungsvorrichtung vorhandenen Geräuschvergleichswert zugeordnet, dem er am nächsten kommt. Der diesem Geräuschvergleichswert zugeordnete Verschleißwert oder Laufleistungswert wird dann auf einer Anzeigevorrichtung, wie beispielsweise einem Bildschirm, ausgegeben. Vorteilhafterweise wird der bedienenden Person auf dieser Anzeigevorrichtung nach Eingabe des Typs des zu untersuchenden Bauteils auch angegeben, an welchen Messpunkten an diesem spezifischen Bauteil die Messung des Geräusches auszuführen ist. Überhaupt kann die Datenverarbeitungsvorrichtung über die Anzeigevorrichtung die bedienende Person Schritt für Schritt durch das ganze Messverfahren führen.

## Patentansprüche

1. Verfahren zur Bestimmung der Laufleistung oder des Verschleißes eines sich bewegenden Bauteils oder einer Bauteilgruppe, wobei es sich beim sich bewegende Bauteil oder der Bauteilgruppe um ein Bauteil oder eine Bauteilgruppe eines Verbrennungsmotors handelt; **dadurch gekennzeichnet dass** das vom sich bewegenden Bauteil oder der Bauteilgruppe im Ultraschallbereich von 30 bis 50 kHz abgegebene Geräusch mittels einer Ultraschallsonde gemessen wird,
dass das gemessene Geräusch mit im Vorhinein bestimmten, von der Laufleistung oder dem Verschleiß abhängigen und für das jeweilige Bauteil oder die Bauteilgruppe spezifischen Geräuschwerten verglichen wird, wobei der gemessene Geräuschwert, dem im Vorhinein bestimmten Geräuschwert, dem er am nächsten liegt, zugeordnet wird, und dass anhand dieses Vergleichs die Laufleistung oder der Verschleißwert des sich bewegenden Bauteils oder der Bauteilgruppe bestimmt wird.

2. Verfahren nach einem der vorhergehenden Ansprüche **dadurch gekennzeichnet, dass** das Geräusch an mehreren Punkten gemessen wird, und aus diesen Geräuschen ein Mittelwert errechnet wird, der dann mit den im Vorhinein bestimmten Geräuschwerten verglichen wird.

3. Verfahren nach Anspruch 2, **dadurch gekennzeichnet, dass** das Geräusch an 3 Punkten des sich bewegenden Bauteils oder der Bauteilgruppe gemessen wird.

4. Verfahren nach einem der vorhergehenden Ansprüche, **dadurch gekennzeichnet, dass** beim Geräusch der Schalldruck gemessen wird.

5. Verfahren nach einem der vorhergehenden Ansprüche, **dadurch gekennzeichnet, dass** es sich beim sich bewegenden Bauteil um eine Nockenwelle, eine Kurbelwelle, eine Achse, ein Lager oder ein Rad handelt.

6. Verfahren nach einem der vorhergehenden Ansprüche, **dadurch gekennzeichnet, dass** der Vergleich des gemessenen Geräusches mit den im Vorhinein bestimmten Geräuschwerten in einer elektronischen Datenverarbeitungsvorrichtung ausgeführt wird, in der die im Vorhinein bestimmten Geräuschwerte gespeichert sind.

## Claims

1. Method for determining the mileage or the wear of a moving component or a component assembly, wherein the moving component or the component assembly is a component or a component assembly of an internal combustion engine, **characterised in that** the noise that is output by the moving component or the component group in the ultrasonic range of 30 to 50 kHz is measured by means of an ultrasonic probe,
that the measured noise is compared to noise values that are determined in advance and are dependent upon the mileage or the wear and specific for the respective component or the component assembly,
wherein the measured noise value is allocated to the closest noise value that is determined in advance and that the mileage or the wear index of the moving component or the component assembly is determined with reference to this comparison.

2. Method according to any one of the preceding claims **characterised in that** the noise is measured at multiple points and an average value is calculated from said noises, said average value is then compared to the noise values that are determined in advance.

3. Method according to claim 2, **characterised in that** the noise is measured at 3 points of the moving component or the component assembly.

4. Method according to any one of the preceding claims, **characterised in that** the sound pressure is measured during the noise output.

5. Method according to any one of the preceding claims, **characterised in that** the moving component is a camshaft, a crankshaft, an axle, a bearing or a wheel.

6. Method according to any one of the preceding claims, **characterised in that** the comparison of the measured noise to the noise values that are determined in advance is performed in an electronic data processing device and the noise values that are determined in advance are stored in said electronic data processing device.

## Revendications

1. Procédé de détermination du kilométrage ou de l'usure d'un composant en mouvement ou d'un groupe de composants, dans lequel le composant en mouvement ou le groupe de composant est un composant ou un groupe de composant d'un moteur à combustion ;
**caractérisé en ce que**
le bruit émis par le composant en mouvement ou le groupe de composants situé dans la plage ultrasonique de 30 à 50 kHz est mesuré au moyen d'une sonde ultrasonique,
**en ce que** le bruit mesuré est comparé avec des valeurs de bruit déterminées au préalable, dépendantes du kilométrage ou de l'usure et spécifiques pour le composant respectif ou le groupe de composants,
la valeur de bruit mesurée est associée à la valeur de bruit déterminée au préalable, laquelle est la plus proche, et **en ce qu'**à l'aide de cette comparaison, le kilométrage ou la valeur d'usure du composant en mouvement ou du groupe de composants est déterminé.

2. Procédé selon l'une quelconque des revendications précédentes **caractérisé en ce que** le bruit est mesuré à plusieurs points et **en ce qu'**à partir de ces bruits, une valeur moyenne est calculée qui est ensuite comparée avec les valeurs de bruit déterminées au préalable.

3. Procédé selon la revendication 2, **caractérisé en ce que** le bruit est mesuré à 3 points du composant en mouvement ou du groupe de composants.

4. Procédé selon l'une quelconque des revendications précédentes, **caractérisé en ce que** la pression sonore du bruit est mesurée.

5. Procédé selon l'une quelconque des revendications précédentes, **caractérisé en ce que** le composant en mouvement est un arbre de came, un vilebrequin, un essieu, un palier ou une roue.

6. Procédé selon l'une quelconque des revendications précédentes, **caractérisé en ce que** la comparaison du bruit mesuré avec les valeurs de bruit déterminées au préalable est réalisée dans un dispositif électronique de traitement de données, dans lequel les valeurs de bruits déterminées au préalable sont mémorisées.
